# EUROPEAN PATENT SPECIFICATION

(11) **EP 4 362 411 B1**
(45) Date of publication and mention of the grant of the patent: **20.05.2026**
(21) Application number: 23204360.4
(22) Date of filing: 18.10.2023
(51) Int. Cl.: H04L 41/0806, H04L 43/065, H04L 43/0852, H04L 43/087

(54) **METHODS OF UE-ASSISTED REPORT**
VERFAHREN FÜR UE-UNTERSTÜTZTE BERICHTE
PROCÉDÉS DE RAPPORT ASSISTÉ PAR UE

(30) Priority: 26.10.2022 WO PCT/CN2022/127648; 29.08.2023 CN 202311096287
(43) Date of publication of application: 01.05.2024
(73) Proprietor: MEDIATEK INC., Hsinchu City 30078 (TW)
(72) Inventor: CHEN, Jing-Wei, Hsinchu City (TW); CHEN, Tao, Beijing (CN); CHEN, Yih-Shen, Hsinchu City (TW); CHENG, Ming-Yuan, Hsinchu City (TW)
(74) Representative: Patentship Patentanwaltsgesellschaft mbH

(56) References cited:
- US-A1- 2021 409 990
- MA LIANGPING ET AL: "[FS_SmarTAR] Latency Aspects for SmarTAR", vol. 3GPP SA 4, no. Online; 20220902 - 20221104, 5 October 2022 (2022-10-05), XP052212014, Retrieved from the Internet <URL:https://www.3gpp.org/ftp/TSG_SA/WG4_CODEC/3GPP_SA4_AHOC_MTGs/SA4_MBS/Docs/S4aI221391.zip S4aI221391.docx> [retrieved on 20221005]
- "3rd Generation Partnership Project; Technical Specification Group SA; Study on Tethering AR Glasses - Architectures, QoS and Media Aspects (Release 18)", no. V0.3.0, 23 September 2022 (2022-09-23), pages 1 - 28, XP052210992, Retrieved from the Internet <URL:https://ftp.3gpp.org/Specs/archive/26_series/26.806/26806-030.zip 26.806v0.3.0-rm.docx> [retrieved on 20220923]
- MEDIATEK INC: "Introduction of Sidelink Relay", vol. RAN WG2, no. Electronic; 20220221 - 20220303, 14 February 2022 (2022-02-14), XP052110327, Retrieved from the Internet <URL:https://ftp.3gpp.org/tsg_ran/WG2_RL2/TSGR2_117-e/Docs/R2-2202343.zip R2-2202343 Stage 2 CR on Introduction of SL Relay.docx> [retrieved on 20220214]

## Description

### TECHNICAL FIELD

The disclosed embodiments relate generally to wireless communication, and, more particularly, to UE-assisted report.

### BACKGROUND

The modern extended reality (XR) technology allows users to explore augmented reality (AR) and virtual reality (VR) with various applications and possibilities in their daily life. Users can enjoy the XR, a term to refer to AR and VR, service through their own wearable devices, such as smart watches and glasses. The XR service demands strict packet delay budget (PDB) and high reliability on packet transmission compared to conventional data traffic. Any packet with transmission latency out of delay budget would decrease user experience. Furthermore, to connect users' wearable devices to network, tethering mode is commonly used to share the network accessibility from smartphone to low-end devices. Unlike the transmission where device directly connected to network, the network has little cognition on tethering path's serving quality and latency of a tethered device. As a result, XR traffic requested by tethered device is hard to satisfy the given latency requirement.

Improvements and enhancements are required to improve latency report.

Latency issues for 5G systems are disclosed in "[FS_ SmarTAR] Latency Aspects for SmarTAR", Qualcomm Incorporated, 3GPP SA4 MBS SWG online, 06 October 2022. The Smartly Tethering AR Glasses (SmarTAR) is disclosed in "3rd Generation Partnership Project; Technical Specification Group SA; Study on Tethering AR Glasses - Architectures, QoS and Media Aspects (Release 18)", 3GPP TR 26.806 V0.3.0, 2022-08.

US 2021/0409990 A1 discloses a drive testing method and apparatus as well as a driving test control method and apparatus. Support of sidelink relay in NR is disclosed in "Introduction of Sidelink Relay", MediaTek Inc., 3GPP TSG-R_AN WG2 Meeting #117 Electronic Online Meeting, February 21 - March 3, 2022.

### SUMMARY

The invention is set out in the appended set of claims.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary wireless network that supports UE-assisted tethering report in accordance with embodiments of the current invention.
Figure 2 illustrates an exemplary top level diagram for the UE-assisted tethering report and jitter report for the XR traffic in accordance with embodiments of the current invention.
Figure 3 illustrates exemplary diagrams for embodiments of measurement procedures for the UE-assisted latency report for the tethering relay path and jitter report for the XR traffic in accordance with embodiment of the current invention.
Figure 4 illustrates an exemplary end-to-end protocol diagram for the UE-assisted latency report with UE-assisted procedure and jitter report for the XR traffic in accordance with embodiments of the current invention.
Figure 5 illustrates an exemplary message diagram for a periodic reporting for the UE-assisted latency report for the tethering relay path and jitter report for the XR traffic in accordance with embodiments of the current invention.
Figure 6 illustrates exemplary diagrams for embodiments of reporting procedures for the UE-assisted latency report for the tethering relay path and jitter report for the XR traffic in accordance with embodiment of the current invention.
Figure 7 illustrates an exemplary message diagram for direct reporting by the remote UE with periodic reporting in accordance with embodiment of the current invention.
Figure 8 illustrates an exemplary flow chart for the UE-assisted latency report for the tethering relay path in accordance with embodiments of the current invention.
Figure 9 illustrates an exemplary flow chart for the UE-assisted jitter report for the XR traffic in accordance with embodiments of the current invention.

### DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc. (Collectively referred to as "elements"). These elements may be implemented using electronic hardware, computer software, or any combination thereof. Whether such elements are implemented as hardware or software depends upon the particular application and design constraints imposed on the overall system. Also please note that even some embodiments are described in 5G context, the invention can be applied to 6G or other radio access technology.

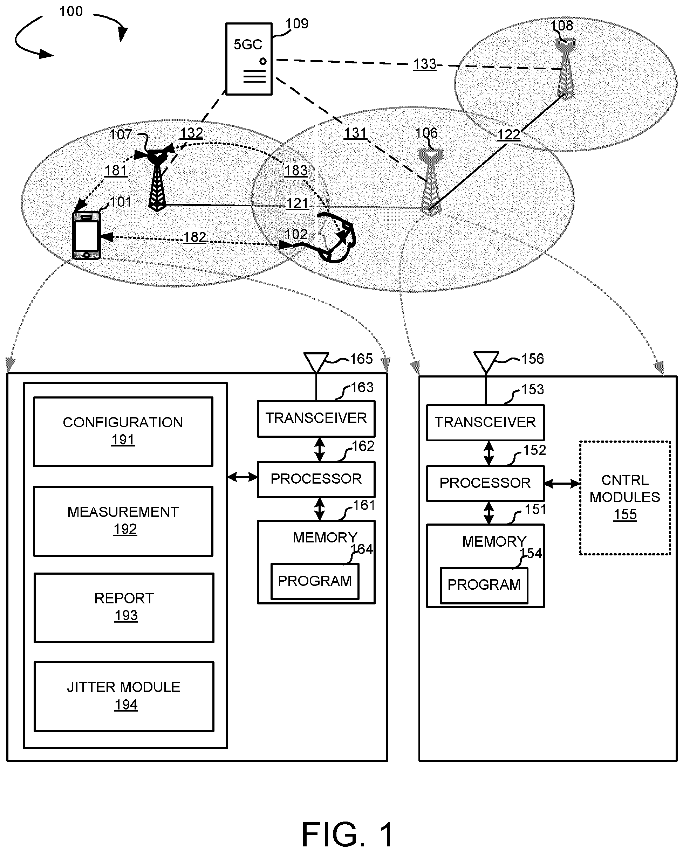

Figure 1 is a schematic system diagram illustrating an exemplary wireless network that supports UE-assisted report in accordance with embodiments of the current invention. Wireless communication network 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 106, gNB 107 and gNB 108 are base stations in the wireless network, the serving area of which may or may not overlap with each other. gNB 106 is connected with gNB 107 via Xn interface 121. gNB 106 is connected with gNB 108 via Xn interface 122. A 5G network entity 109 connects with gNB 106, 107, and 108 via NG connection 131, 132, and 133, respectively.

Figure 1 illustrates an exemplary tethering path for wireless services. The scenario such as commercial use case with smartphone sharing network connection to XR wearable devices is focused. The benefit of smartphone tethering for XR service to low-end device is straightforward. Smartphone supporting more antennas and wide bandwidth transmission can achieve high throughput on Uu interface (a direct link between gNB and UE). In contrast, XR wearable devices with low-end capability may suffer from low throughput and high latency connecting to Uu interface. As a result, tethering is beneficial for improving both network spectrum efficiency and XR user experience. UE 101 and UE 102 are exemplary mobile devices in wireless network 100. In a tethering mode, UE 101 is connected with gNB 107 through Uu link 181. UE 101 and UE 102 are connected through a second link 182 for tethering. In other embodiment, the tethering relay path is part of a mesh relay link. The same principle applies to the end-to-end latency measurement as well as to the tethering path latency measurement. The second link 182 can be PC5 sidelink, a WiFi link, or any other wireless link. In the example, UE 102 is a wearable device, which connects to wireless network 100 through tethering link 182 with relay UE 101, which is connected to gNB 107 through Uu link 181. In one embodiment, the wearable device UE 102 also established a direct link 183 with gNB 107 of wireless network 100. In one scenario, gNB 107 transmits packets to relay UE 101 on relay path 181 through Uu interface. Relay UE 101 forwards packets to remote UE 102 on tethering path 182. Under non-tethering scenario, gNB 107 transmits packets to remote UE 102 directly on direct path 183 through Uu interface.

Figure 1 further illustrates simplified block diagrams of a base station and a mobile device/UE that supports UE-assisted report. gNB 106 has an antenna 156, which transmits and receives radio signals. An RF transceiver circuit 153, coupled with the antenna 156, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 106. Memory 151 stores program instructions and data 154 to control the operations of gNB 106. gNB 106 also includes a set of control modules 155 that carry out functional tasks to communicate with mobile stations. These control modules can be implemented by circuits, software, firmware, or a combination of them.

Figure 1 also includes simplified block diagrams of a UE, such as UE 101. The UE has an antenna 165, which transmits and receives radio signals. An RF transceiver circuit 163, coupled with the antenna, receives RF signals from antenna 165, converts them to baseband signals, and sends them to processor 162. In one embodiment, the RF transceiver 163 may comprise two RF modules (not shown) which are used for different frequency bands transmitting and receiving. RF transceiver 163 also converts received baseband signals from processor 162, converts them to RF signals, and sends out to antenna 165. Processor 162 processes the received baseband signals and invokes different functional modules to perform features in UE 101. Memory 161 stores program instructions and data 164 to control the operations of UE 101. Antenna 165 sends uplink transmission and receives downlink transmissions to/from antenna 156 of gNB 106.

The UE also includes a set of control modules that carry out functional tasks. These control modules can be implemented by circuits, software, firmware, or a combination of them. Configuration module 191 obtains latency measurement configuration for a tethering relay path. Measurement module 192 performs a packet latency measurement with a UE-assisted procedure based on the latency measurement configuration. Report module 193 sends a latency report based on the packet latency measurement, wherein the latency report includes information for an end-to-end latency for the tethering relay path. Jitter module 194 performs a jitter measurement for an XR traffic, and sends a UE-assisted report to a network entity, wherein the UE-assisted report is for an end-to-end path of the XR traffic based on the jitter measurements, and the UE-assisted report includes one or more elements comprising jitter information and burst arrival time.

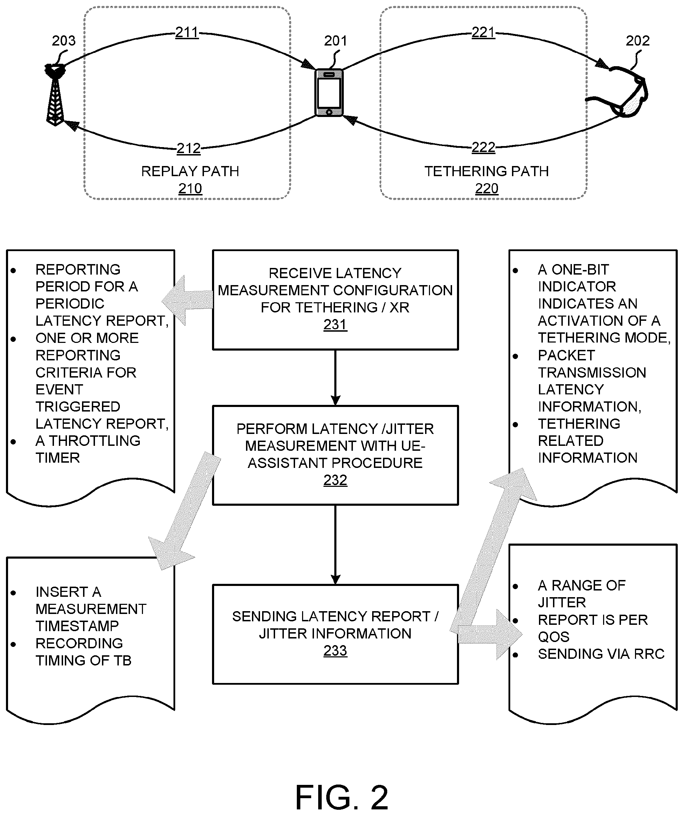

Figure 2 illustrates an exemplary top level diagram for the UE-assisted tethering report and jitter report for the XR traffic in accordance with embodiments of the current invention. As an exemplary network configuration, relay UE 201 establishes a relay path 210 with gNB 203. Relay paths 210 includes downlink 211 and uplink 212. Relay UE 201 is also connected to remote UE 202 through tethering path 220. Tethering path 220 includes downlink 221 and uplink 222. Since tethering path latency is unknown to network, packet latency uncertainty causes violation on packet PDB requirement. Referring to 3GPP specification (e.g., 3GPP TR 38.838), PDB is defined as the tolerable transmission delay for a packet, which is one of key performance indicator (KPI) for XR services. For example, for the uplink traffic from remote UE 202 to gNB 203, the latency of link 212 is unknown to remote UE 202. Similarly, the latency of link 221 is unknown to gNB 203. As a result, the difficulties of network scheduling, link adaptation, rate adaptation and network topology planning are increased. Meanwhile, if the received packet is out-of-PDB, there is no existing feedback mechanism for the receiver to promptly feed the unqualified latency result back to the transmitter. Therefore, only high layer codec can perform mode/rate down selection to overcome the unqualified service. The gNB and UE cannot receive feedback and make adjustment for transmission. In the end, XR users' experiences are damaged.

In one novel aspect, the UE measures packet latency with UE-assisted procedure for an end-to-end tethering relay path and sends latency report. In another novel aspect, the UE performs jitter measurements for an XR traffic and reports UE-assisted information including the jitter information. At step 231, the relay UE 201 and/or the remote UE 202 receive latency measurement configuration for tethering and/or latency/jitter measurement configuration for the XR traffic. In one embodiment, the configuration includes one or more elements comprising a reporting period for a periodic latency report, one or more reporting criteria for event triggered latency report, and a throttling timer.

At step 232, remote UE 202 and/or relay UE 201 perform latency measurement or jitter measurement with UE-assisted procedure. In one embodiment, the UE-assisted procedure includes inserting a measurement timestamp. In one embodiment, the measurement timestamp is inserted at an adaptation layer, a packet data convergence protocol (PDCP) layer, or a transport layer. In another embodiment, the UE-assisted procedure includes recording timing of a predefined transport block (TB) of the packet. At step 233, the UE sends the latency report and/or the jitter report. In one embodiment, the latency report includes one or more elements comprising a one-bit indicator indicates an activation of a tethering mode, packet transmission latency information, and tethering related information. In one embodiment, the packet transmission latency information includes one or more latency elements comprising a measured path information, measured packet information, latency characteristic, and a latency value. In another embodiment, the tethering related information includes one or more elements comprising a UE buffer status indicating queueing on tethering relay path, a listen-before-talk (LBT) latency, a channel busy ratio, a transmission failure rate, and a channel quality report of the tethering relay path. In one embodiment, the jitter information is sent to the network in an UE-assisted report. In one embodiment, the UE-assisted report includes a range of jitter of the XR traffic. In another embodiment, the UE-assisted report is per Quality of Service (QoS) flow. In an example, the UE receives a a measurement configuration from the wireless network, wherein the measurement configuration indicates one or more QoS flows for the UE to measure. In yet another embodiment, the UE-assisted report is sent via RRC message.

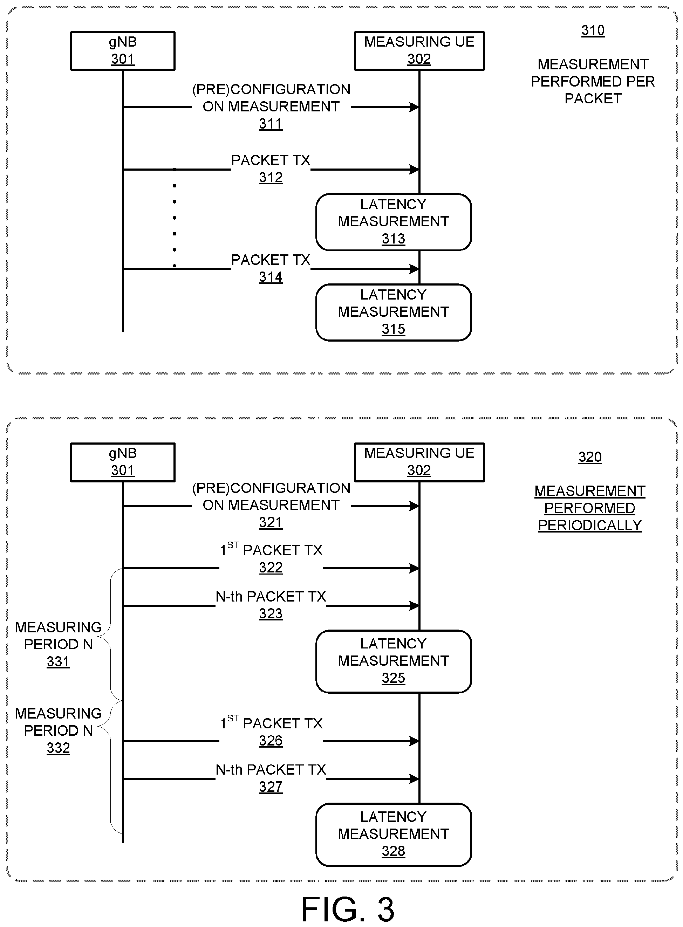

Figure 3 illustrates exemplary diagrams for embodiments of measurement procedures for the UE-assisted latency report for the tethering relay path and jitter report for the XR traffic in accordance with embodiment of the current invention. In one embodiment, the remote and/or the relay UE measure the packet transmission and/or reception latency of entire and/or partial transmission path. As an example, gNB 301 is connected with measuring UE 302. Measuring UE can be a remote UE or a relay UE. In a mesh relay path, the measuring UE can be one or more of the relay UEs. The packet latency measurement is performed per packet and/or periodically on packet with a (pre)configured period and/or periodically on slot with a (pre)configured period and/or by network triggering event.

In one embodiment 310, the UE performs the latency measurement and/or the jitter measurement per each packet. At step 311, gNB 301 sends (pre)configuration on measurement to measuring UE 302. At step 312, gNB 301 sends packet transmission to measuring UE 302. At step 313, measuring UE 302 performs latency measurement on the received packet. As an example, with each packet coming, such packet sent by gNB 301 at step 314, measuring UE 302, at step 315, performs latency measurement and/or jitter measurement.

In another embodiment 320, the UE performs the latency measurement and/or the jitter measurement periodically. At step 321, gNB 301 sends (pre)configuration on measurement to measuring UE 302. Measuring period N is configured. Measuring period N indicates performing the latency measurement every N packets. At step 322, gNB 301 sends 1^{st} packet to measuring UE 302. Measuring period N 331 starts. At step 323, gNB 301 sends Nth packet to measuring UE 302. At step 325, measuring UE 302 performs latency measurement and/or jitter measurement and measuring period N 331 ends. After receiving the Nth packet, measuring period N 332 starts. At step 326, gNB 301 sends the 1^{st} packet for measuring period N 332 to measuring UE 302. At step 327, gNB 301 sends the Nth packet to measuring UE 302 and measuring period N 332 ends. At step 328, measuring UE 302 performs latency measurement and/or jitter measurement.

In one embodiment, as illustrated in steps 311 and 321, to set up packet latency measurement, gNB configures relay UE and/or remote UE via RRC message and/or MAC CE commands. The configuration may include one or multiple fields as follows: 1) measurement period: the period for the UE to perform latency measurement on packet; 2) measurement path: the corresponding path to perform latency measurement, which is further indicated by packet source station ID, packet destination station ID; 3) measurement method: the latency measured by the inserted timestamp or alternatives; and 4) measurement packet: the packet ID or traffic to be measured.

In one embodiment, the procedures of 313, 315, 325 and 328 measures latency and/or jitter with UE-assisted procedure. The packet latency is measured on protocol layer-2 (L2) within PDCP layer, Adaptation layer (e.g. SRAP layer) or transport layer. In one embodiment, to measure the packet transmission latency, a measurement timestamp is introduced into L2 protocol within PDCP layer and/or Adaptation layer. The measurement timestamp carries the timing information when gNB and/or relay UE and/or remote UE generate and/or forward the packet to its receiver. In one embodiment, the measurement time stamp is carried in the L2 protocol header, such as the adaptation layer header. With the inserted timestamp, the station receiving packet derives the timing difference between the packet reception time and packet generated/forwarded time. As a result, the packet latency of entire and/or partial transmission path is measured. In another embodiment, the UE measures the packet latency by recording the timing of transmission/reception of first TB of the packet and transmission/reception of last TB of the packet. By subtracting the recording timing difference on MAC and/or PHY, the packet latency of the corresponding transmission path is measured.

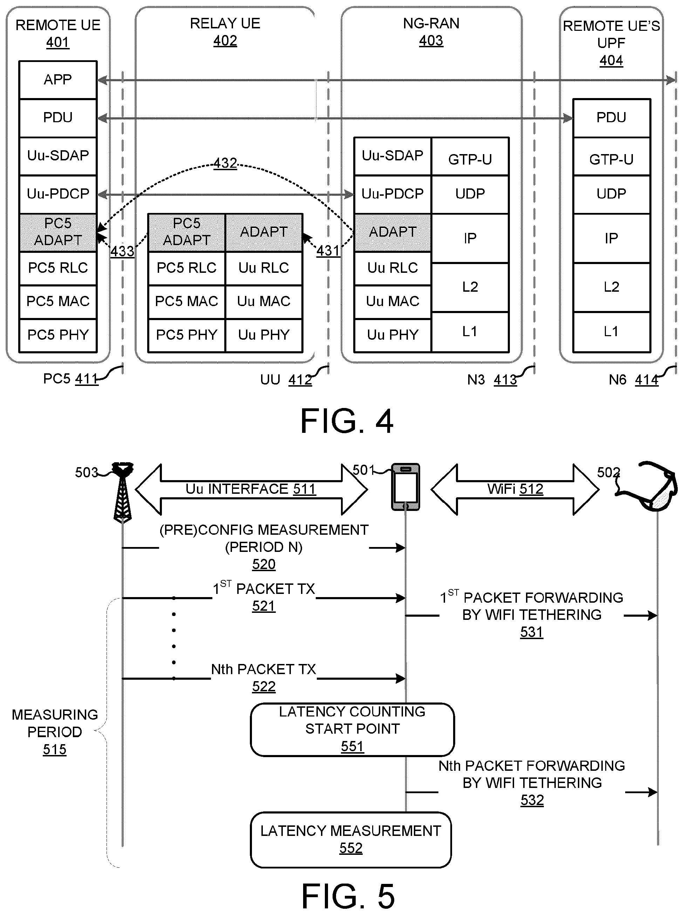

Figure 4 illustrates an exemplary end-to-end protocol diagram for the UE-assisted latency report with UE-assisted procedure and jitter report in accordance with embodiments of the current invention. In an exemplary setting, a remote UE 401 has a PC5 interface 411 with relay UE 402. Relay UE 402 is connected with gNB (NG-RAN) 403 through Uu interface 412. Remote UE 401 establishes APP layer and PDU layer connection with remote UE's user plane function (UPF) entity 404. NG-R_AN 403 connects with remote UE's UPF entity 404 through N3 interface 413. Remote UE's UPF entity 404 has connects with other externa/internal networks or service platforms, such as the internet, the public cloud, or private clouds, through N6 interface 414.

In one exemplary configuration, gNB (NG-R_AN) 403 is serving remote UE 401 with L2 relay UE 402 through PC5 interface 411. Referring to 3GPP specification (e.g., 3GPP TS 38.300), the L2 relay is defined as the relay that is implemented in L2. The gNB 403 sets up configuration for latency measurement at UE side. In this embodiment, the gNB configures the measurement period to be per packet measuring and configures the measurement method to be measuring by timestamp. To measure latency of each packet from gNB 403 to the relay UE 402 (through Uu link), and relay UE 402 to remote UE 401 (through tethering link, such as PC5 link), the measurement timestamp is inserted into SRAP layer at gNB side in DL packet. At step 431, the inserted measurement timestamp is forwarded to ADAPT layer at relay UE 402. In this embodiment, once the relay UE 402 receives and decodes the packet from gNB at SRAP layer, the relay UE measures packet latency on Uu link by calculating the difference between current timestamp and SRAP timestamp and reports latency 431 to gNB 403. The relay UE 402 then, forwards the packet to remote UE 401 through PC5 interface 411. Once the remote UE 401 receives and decodes the packet from relay UE 402 at SRAP layer, the remote UE 401 measures packet latency on entire path (Uu link and tethering link) by calculating the difference between current timestamp and SRAP timestamp, and reports latency 432 to gNB 403. Upon reception of both latency measurement results from remote UE and relay UE, the gNB derives tethering link latency by calculating the difference between latency 432 and latency 431.

In another embodiment, the relay UE inserts a new timestamp of packet forwarding timing into SRAP layer, once the remote UE decodes the packet from relay UE at SRAP layer and gets the forwarding timestamp, the remote UE measures packet latency on tethering link by calculating the difference between current timestamp and new SRAP timestamp and reports latency 433 to gNB. Upon reception of both latency measurement results from remote UE and relay UE, the gNB derives entire path latency (Uu link and tethering link) by summing up latency 433 and latency 431.

The principles presented in the embodiment of DL packet transmission can also be applied to UL packet transmission when remote UE inserts the timestamp into SRAP layer of UL packet.

Figure 5 illustrates an exemplary message diagram for a periodic reporting for the UE-assisted latency report for the tethering relay path and jitter report for the XR traffic in accordance with embodiments of the current invention. In one embodiment, the UE-assisted latency report is measured and reported periodically for every N packet TX. In one embodiment, latency measurement is performed on one packet for every N packet TX. As a use case scenario, periodic measurements and latency report are used when the data is transmitted/received with burst arrival time. In one example, gNB (NG-R_AN) 503 serves remote UE 502 with layer-3 (L3) relay UE 501 through WIFI tethering. Relay UE 501 connects with gNB (NG-RAN) 503 through Uu interface 511. Relay UE 501 connects with remote UE 502 through second link, such as Wi-Fi 512. In this embodiment, gNB 501 sets up configuration for latency measurement at relay UE 501 side, where gNB 503, at step 520, configures the measurement to be periodically measured on packet and configures the measurement method to be up to UE implementation. gNB 503 also configures the measurement path to be the link between the relay UE and the remote UE (tethering link). To measure the latency of the desired packet transmission on tethering link, the relay UE first records a timing as the counting start point before packet forwarding. A measuring period 515 is configured. As illustrated, the measuring period is configured to be N TX packets.

At step 521, gNB 503 sends the first packet to relay UE 501. Relay UE starts counting the packet number. At step 531, relay UE 501 forward the first packet to remote UE 502. At step 522, gNB 503 sends the Nth packet to relay UE 501 to be forwarded to the remote UE 502. Upon receiving the Nth packet, at step 551, relay UE 501 starts latency measurement with latency counting start point. At step 532, relay UE 501 transmits the corresponding packet through WIFI tethering. At step 552, once the packet transmission is done, either finishing the initial transmission or receiving ACK feedback from remote UE, the latency is measured by calculating the timing difference between counting start point (551) and packet transmission end point. In one embodiment, the relay UE may perform the latency measurement at the first packet TX and perform the next latency measurement at N+1 packet TX or the next burst arrival packet. In another embodiment, the relay UE may perform the latency measurement at the Nth TX and perform the next latency measurement at 2Nth packet or the next burst arrival packet. The principles presented in the embodiment of DL packet transmission can also be applied to UL packet transmission when relay UE records the timing of the packet transmission start point and end point.

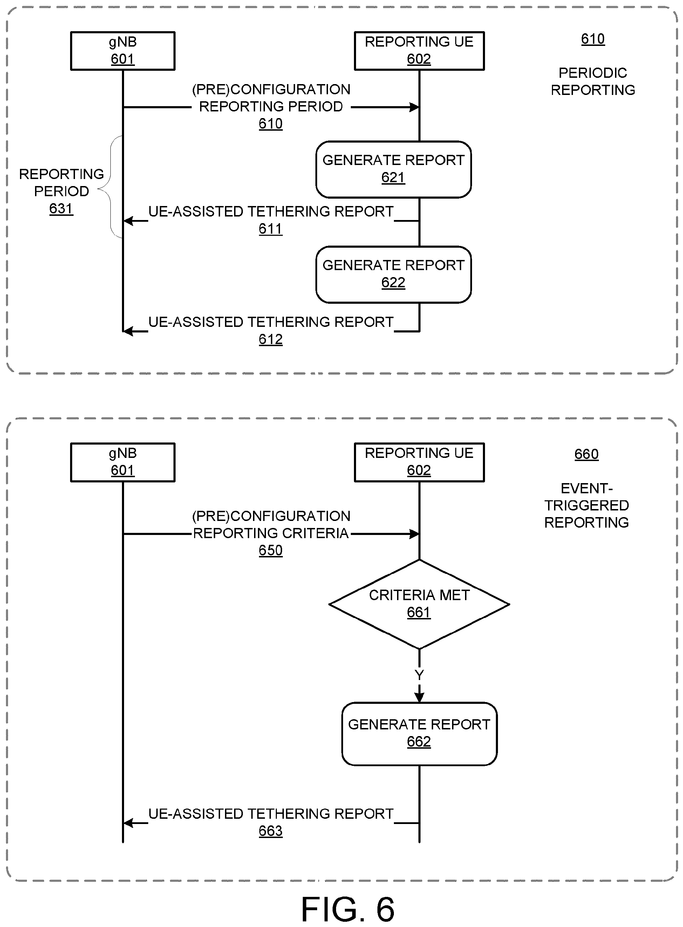

Figure 6 illustrates exemplary diagrams for embodiments of reporting procedures for the UE-assisted latency report for the tethering relay path and jitter report for the XR traffic in accordance with embodiment of the current invention. A relay UE and/or remote UE reports tethering-related information to another connected relay UE and/or remote UE and/or gNB. The tethering-related information is reported via RRC message and/or MAC CE. The reporting is performed periodically on slot with a (pre-)configured period and/or by network triggering event and/or when (pre-)configured reporting criteria/threshold is fulfilled (e.g., when measured latency exceeds configured reporting threshold).

In one embodiment 610, the UE-assistant report for tethering latency report and/or jitter information is sent periodically. gNB 601 is connected with reporting UE 602. At step 610, gNB 601 (pre)configures reporting period, with a reporting period of 631. At step 621, reporting UE 602 generates report. Based on the configured reporting period 631, at step 611, reporting UE 602 sends UE-assisted tethering report and/or jitter information to gNB 601. At step 622, in the next reporting period, reporting UE 602 generates latency report and/or jitter report. At step 612, reporting UE 602 sends UE-assisted tethering report and/or jitter information to gNB 601.

In another embodiment 660, the reporting UE sends latency report and/or jitter information to the network upon detecting one or more preconfigured event. At step 650, gNB 601 (pre)configures one or more triggering criteria to reporting UE 602. At step 661, the reporting UE 602 determines if one or more triggering criteria is met. If step 661 determines yes, at step 662, reporting UE 602 generates tethering latency report and/or jitter information. At step 663, reporting UE 602 sends UE-assisted tethering report and/or jitter information to gNB 601.

Relay UE 601 and/or remote UE 602 reports tethering-related information to another connected relay UE and/or remote UE and/or gNB. The tethering-related information is reported via RRC message and/or MAC CE. The reporting is performed periodically on slot with a (pre-)configured period and/or by network triggering event and/or when (pre-)configured reporting criteria/threshold is fulfilled (e.g., when measured latency exceeds configured reporting threshold). In one embodiment, the tethering-related information includes one or multiple fields as follows:
- Tethering mode: 1 bit to indicate if the UE is serving through tethering mode or not.
- Latency: the packet transmission latency. The reporting contents related to latency includes one or multiple fields as follows:
   ∘ Path of measured latency: the path of latency measurement is indicated by packet source station ID, packet destination station ID.
   ∘ Packet of measured latency: the measured packet is classified by packet ID, packet size and the traffic flow ID of the packet.
   ∘ Latency characteristic: the measured packet transmission latency is expressed in one or multiple statistics as follows:
      ▪ Average latency: Average latency of N previous measured packet latencies, where N is (pre-)configured or determined by total number of measured packet latencies within reporting period.
      ▪ Maximum/minimum latency: maximum/minimum latency of N previous measured packet latencies, where N is (pre-)configured or determined by total number of measured packet latencies within reporting period.
      ▪ Jitter: the jitter of packet transmission latency. With Delta value of the Jitter, the range of jitter in the traffic is reported.
      ▪ STD: the standard deviation of previous measured latencies.
   ∘ Latency value: the reported latency value is represented in one of the following formats:
      ▪ (Pre-)configured granularity: e.g., for 30ms latency with granularity set as 5ms, latency value is reported to six.
      ▪ Absolute value in milliseconds.
      ▪ Delta value: the delta value to PDB in milliseconds, e.g., for 30ms latency with packet PDB equal to 20ms, +10 is reported as latency value.
      ▪ A mix of part or all of the above expressions.
- Side information: The other information related to tethering, e.g., UE buffer status to indicate queueing on tethering path, LBT latency or channel busy ratio if unlicensed, transmission failure rate (reliability), channel quality report of tethering path.

In addition, combining the jitter and latency information, the packet traffic characteristics, such as burst arrival time are determined and reported.

In one embodiment, the configuration is transmitted by gNB (in steps 610 or 650) via RRC message and/or MAC CE commands and/or PDCCH to relay UE and/or remote UE. The configuration includes one or multiple fields as follows:
- Reporting mode: It indicates if the reporting is performed periodically or based on event.
- Reporting period: If the reporting is set to be periodic report, it indicates the time-period of the report.
- Reporting criteria: If the reporting is set to be event-based report, it indicates the criteria to trigger the reporting event. e.g., if a latency threshold is set to be reporting criteria, the report is triggered when the measured latency > latency threshold.

- Timer: Timer to avoid frequent reporting if event-based report is configured.
- Reporting latency: It indicates if the latency measurement result is required in the report.

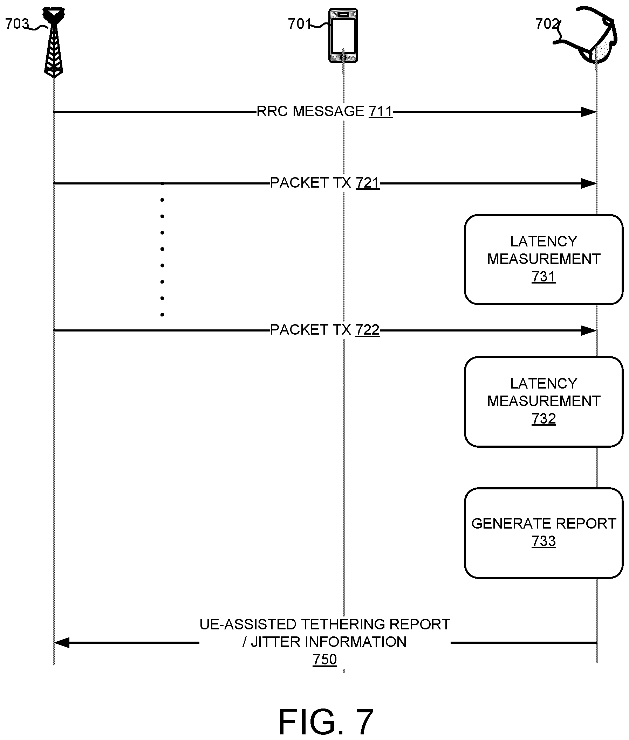

Figure 7 illustrates an exemplary message diagram for direct reporting by the remote UE with periodic reporting in accordance with embodiment of the current invention. Remote UE 702 has a tethering path through relay UE 701 to gNB 703. With L2 relay, the remote UE 702 is visible to gNB 703. gNB 703, at step 711, sets up the UE-assisted tethering report configuration in RRC message by setting the reporting mode to be periodic report and setting the reporting latency to be true (enable latency report). Additionally, for latency measurement, the gNB also sets up latency measurement configurations in RRC message, including setting measurement period to be per packet measurement, the measuring method to be timestamp. gNB 703 transmits RRC message to the remote UE through L2 relay UE.

At step 721, gNB 703 transmits data packets to remote UE 702 through L2 relay UE 701. Based on the configuration, at step 731, remote UE 702 starts to measure packet transmission latency for each packet based on the inserted timestamp. Multiple transmission are received, such as at step 722, gNB 703 sends packets to remote UE 703 via L2 relay through relay UE 701. At step 732, remote UE 702 performs latency measurement. At step 733, remote UE 702 calculates the average latency by averaging previous measurement result within reporting period. Remote UE 702 then generates tethering report and/or jitter information by setting tethering mode to be true and puts the latency value as delta value of PDB into report. At step 750, remote UE 702 transmits the report to gNB 703 through L2 relay UE 701.

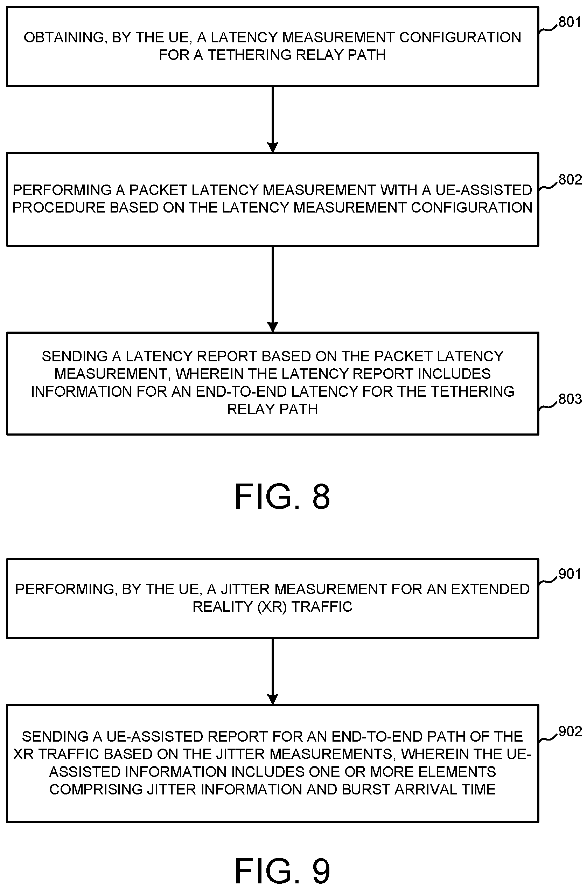

Figure 8 illustrates an exemplary flow chart for the UE-assisted latency report for the tethering relay path in accordance with embodiments of the current invention. At step 801, the UE obtains a latency measurement configuration for a tethering relay path. At step 802, the UE performs a packet latency measurement with a UE-assisted procedure based on the latency measurement configuration. At step 803, the UE sends a latency report based on the packet latency measurement, wherein the latency report includes information for an end-to-end latency for the tethering relay path.

Figure 9 illustrates an exemplary flow chart for the UE-assisted jitter report for the XR traffic in accordance with embodiments of the current invention. At step 901, the UE performs a jitter measurement for an extended reality (XR) traffic. At step 902, the UE sends a UE-assisted report for an end-to-end path of the XR traffic based on the jitter measurements, wherein the UE-assisted report includes one or more elements comprising jitter information and burst arrival time.

Various modifications, adaptations, and combinations of various features of the described embodiments can be practiced without departing from the scope of the invention as set forth in the claims.

## Claims

1. A method for a user equipment (101), UE, in a wireless network (100) comprising:
obtaining (801), by the UE (101), a latency measurement configuration for a tethering relay path;
performing (802) a packet latency measurement with a UE-assisted procedure based on the latency measurement configuration; and
sending (803) a latency report based on the packet latency measurement, wherein the latency report includes information for an end-to-end latency for the tethering relay path;
wherein the tethering relay path includes a Uu link between a relay UE (101) and a base station (106) and a second link between the relay UE (101) and a remote UE (102), wherein the UE is the relay UE (101) or the remote UE (102);
**characterized in that** the latency report includes a one-bit indicator indicates an activation of a tethering mode and a latency value, and the latency value comprises jitter information and burst arrival time.

2. The method of claim 1, wherein the UE-assisted procedure includes inserting a measurement timestamp or recording timing of a predefined transport block, TB, of the packet.

3. The method of claim 2, wherein the measurement timestamp is inserted at an adaptation layer, a packet data convergence protocol, PDCP, layer, or a transport layer.

4. The method of claim 1, wherein the latency measurement configuration includes one or more elements comprising a reporting period for a periodic latency report, one or more reporting criteria for event triggered latency report, and a throttling timer.

5. The method of claim 1, wherein latency report further includes one or more elements comprising packet transmission latency information and tethering related information.

6. The method of claim 5, wherein the packet transmission latency information includes one or more latency elements comprising a measured path information, measured packet information, and latency characteristic.

7. The method of claim 5, wherein the tethering related information includes one or more side elements comprising a UE buffer status indicating queueing on tethering relay path, a listen-before-talk, LBT, latency, a channel busy ratio, a transmission failure rate, and a channel quality report of the tethering relay path.

8. The method of claim 1, wherein the latency report is reported via a radio resource control, RRC, message or a MAC control element, CE.

9. The method of claim 1, wherein the tethering relay path is part of a mesh relay link.

10. A user equipment (101), UE, comprising:
a transceiver (163) that transmits and receives radio frequency, RF, signal in a wireless network (100);
a configuration module (191) that obtains latency measurement configuration for a tethering relay path;
a measurement module (192) that performs a packet latency measurement with a UE-assisted procedure based on the latency measurement configuration; and
a report module (193) that sends a latency report based on the packet latency measurement, wherein the latency report includes information for an end-to-end latency for the tethering relay path;
wherein the tethering relay path includes a Uu link between a relay UE (101) and a base station (106) and a second link between the relay UE (101) and a remote UE (102), wherein the UE is the relay UE (101) or the remote UE (102);
**characterized in that** the latency report includes a one-bit indicator indicates an activation of a tethering mode and a latency value, and the latency value comprises jitter information and burst arrival time.

11. The UE (101) of claim 10, wherein the UE-assisted procedure inserting a measurement timestamp or recording timing of a predefined transport block, TB, of the packet.

12. The UE (101) of claim 10, wherein latency report further includes one or more elements comprising packet transmission latency information and tethering related information.

## Patentansprüche

1. Ein Verfahren für ein Benutzergerät (101), UE, in einem drahtlosen Netzwerk (100), umfassend:
Abrufen (801), durch das UE (101), einer Latenzmesskonfiguration für einen Tethering-Relay-Pfad;
Durchführen (802) einer Paketlatenzmessung mit einem UE-unterstützten Verfahren auf der Grundlage der Latenzmesskonfiguration; und
Senden (803) eines Latenzberichts auf der Grundlage der Paketlatenzmessung, wobei der Latenzbericht Informationen über die End-zu-End-Latenz für den Tethering-Relay-Pfad enthält;
wobei der Tethering-Relay-Pfad eine Uu-Verbindung zwischen einem Relay-UE (101) und einer Basisstation (106) sowie eine zweite Verbindung zwischen dem Relay-UE (101) und einem entfernten UE (102) umfasst, wobei es sich bei dem UE um das Relay-UE (101) oder das entfernte UE (102) handelt;
**gekennzeichnet dadurch, dass** der Latenzbericht einen Ein-Bit-Indikator enthält, der eine Aktivierung eines Tethering-Modus und einen Latenzwert anzeigt, wobei der Latenzwert Jitter-Informationen und die Ankunftszeit des Bursts umfasst.

2. Das Verfahren nach Anspruch 1, wobei das UE-unterstützte Verfahren das Einfügen eines Messzeitstempels oder das Aufzeichnen eines Timings eines vordefinierten Transportblocks, TB, des Pakets umfasst.

3. Das Verfahren nach Anspruch 2, wobei der Messzeitstempel auf einer Anpassungsschicht, einer Paketdatenkonvergenzprotokoll-, PDCP-, Schicht oder einer Transportschicht eingefügt wird.

4. Das Verfahren nach Anspruch 1, wobei die Latenzmesskonfiguration ein oder mehrere Elemente umfasst, die eine Berichtsperiode für einen periodischen Latenzbericht, ein oder mehrere Berichtskriterien für einen ereignisgesteuerten Latenzbericht und einen Drosselungstimer umfassen.

5. Das Verfahren nach Anspruch 1, wobei der Latenzbericht ferner ein oder mehrere Elemente umfasst, die Informationen über die Paketübertragungslatenz und tetheringbezogene Informationen umfassen.

6. Das Verfahren nach Anspruch 5, wobei die Informationen über die Paketübertragungslatenz ein oder mehrere Latenzelemente umfassen, die eine gemessene Pfadinformation, gemessene Paketinformationen und eine Latenzcharakteristik umfassen.

7. Das Verfahren nach Anspruch 5, wobei die tetheringbezogenen Informationen ein oder mehrere Nebenelemente umfassen, die einen UE-Pufferstatus, der ein Einreihen auf dem Tethering-Relay-Pfad anzeigt, eine Listen-before-Talk-, LBT-, Latenz, ein Kanalbelegungsverhältnis, eine Übertragungsfehlerrate und einen Kanalqualitätsbericht des Tethering-Relay-Pfads umfassen.

8. Das Verfahren nach Anspruch 1, wobei der Latenzbericht über eine Funkressourcensteuerungs-, RRC-, Nachricht oder ein MAC-Steuerelement, CE, berichtet wird.

9. Das Verfahren nach Anspruch 1, wobei der Tethering-Relay-Pfad Teil einer Mesh-Relay-Verbindung ist.

10. Ein Benutzergerät (101), UE, umfassend:
ein Transceiver (163), der ein Hochfrequenz-, RF-, Signal in einem drahtlosen Netzwerk (100) sendet und empfängt;
ein Konfigurationsmodul (191), das eine Latenzmesskonfiguration für einen Tethering-Relay-Pfad ermittelt;
ein Messmodul (192), das eine Paketlatenzmessung mit einem UE-unterstützten Verfahren auf der Grundlage der Latenzmesskonfiguration durchführt; und
ein Berichtmodul (193), das einen Latenzbericht auf der Grundlage der Paketlatenzmessung sendet, wobei der Latenzbericht Informationen über die End-zu-End-Latenz für den Tethering-Relay-Pfad enthält;
wobei der Tethering-Relay-Pfad eine Uu-Verbindung zwischen einem Relay-UE (101) und einer Basisstation (106) sowie eine zweite Verbindung zwischen dem Relay-UE (101) und einem entfernten UE (102) umfasst, wobei es sich bei dem UE um das Relay-UE (101) oder das entfernte UE (102) handelt;
**gekennzeichnet dadurch, dass** der Latenzbericht einen Ein-Bit-Indikator enthält, der eine Aktivierung eines Tethering-Modus sowie einen Latenzwert anzeigt, wobei der Latenzwert Jitter-Informationen und die Ankunftszeit des Bursts umfasst.

11. Das UE (101) nach Anspruch 10, wobei das UE-unterstützte Verfahren das Einfügen eines Messzeitstempels oder das Aufzeichnen eines Timings eines vordefinierten Transportblocks, TB, des Pakets umfasst.

12. Das UE (101) nach Anspruch 10, wobei der Latenzbericht ferner ein oder mehrere Elemente umfasst, die Informationen über die Paketübertragungslatenz und tetheringbezogene Informationen umfassen.

## Revendications

1. Procédé pour un équipement utilisateur (101), UE, dans un réseau sans fil (100) comprenant :
réception (801), par l'UE (101), d'une configuration de mesure de latence pour un chemin de relais de tethering ;
réalisation (802) d'une mesure de latence de paquet avec une procédure assistée par UE sur la base de la configuration de mesure de latence ; et
envoi (803) d'un rapport de latence sur la base de la mesure de latence de paquet, dans lequel le rapport de latence comprend des informations relatives à une latence de bout en bout pour le chemin de relais de tethering ;
dans lequel le chemin de relais de tethering comprend un lien Uu entre un UE relais (101) et une station de base (106) et un second lien entre le UE relais (101) et un UE distant (102), dans lequel le UE est le UE relais (101) ou le UE distant (102) ;
**caractérisé en ce que** le rapport de latence comprend un indicateur sur un bit indiquant une activation d'un mode de tethering et une valeur de latence, et la valeur de latence comprend des informations de gigue et un temps d'arrivée de rafale.

2. Le procédé selon la revendication 1, dans lequel la procédure assistée par UE comprend l'insertion d'un horodatage de mesure ou l'enregistrement d'un timing d'un bloc de transport prédéfini, TB, du paquet.

3. Le procédé selon la revendication 2, dans lequel l'horodatage de mesure est inséré au niveau d'une couche d'adaptation, d'une couche de protocole de convergence de données de paquet, PDCP, ou d'une couche de transport.

4. Le procédé selon la revendication 1, dans lequel la configuration de mesure de latence comprend un ou plusieurs éléments comprenant une période de rapport pour un rapport de latence périodique, un ou plusieurs critères de rapport pour un rapport de latence déclenché par événement, et un temporisateur de limitation.

5. Le procédé selon la revendication 1, dans lequel le rapport de latence comprend en outre un ou plusieurs éléments comprenant des informations de latence de transmission de paquet et des informations liées au tethering.

6. Le procédé selon la revendication 5, dans lequel les informations de latence de transmission de paquet comprennent un ou plusieurs éléments de latence comprenant une information de chemin mesuré, une information de paquet mesuré et une caractéristique de latence.

7. Le procédé selon la revendication 5, dans lequel les informations liées au tethering comprennent un ou plusieurs éléments secondaires comprenant un état de tampon UE indiquant une mise en file d'attente sur le chemin de relais de tethering, une latence listen-before-talk, LBT, un rapport d'occupation de canal, un taux d'échec de transmission, et un rapport de qualité de canal du chemin de relais de tethering.

8. Le procédé selon la revendication 1 dans lequel le rapport de latence est rapporté via un message de commande de ressources radio, RRC, ou un élément de commande MAC, CE.

9. Le procédé selon la revendication 1, dans lequel le chemin de relais de tethering fait partie d'un lien de relais maillé.

10. Un équipement utilisateur (101), UE, comprenant :
un émetteur-récepteur (163) qui transmet et reçoit un signal de radiofréquence, RF, dans un réseau sans fil (100) ;
un module de configuration (191) qui obtient la configuration de mesure de latence pour un chemin de relais de tethering ;
un module de mesure (192) qui effectue une mesure de latence des paquets avec une procédure assistée par l'UE basée sur la configuration de mesure de latence ; et
un module de rapport (193) qui envoie un rapport de latence basé sur la mesure de la latence des paquets, dans lequel le rapport de latence comprend des informations sur une latence de bout en bout pour le chemin de relais de tethering ;
dans lequel le chemin de relais de tethering comprend un lien Uu entre un UE relais (101) et une station de base (106) et un second lien entre le UE relais (101) et un UE distant (102), dans lequel le UE est le UE relais (101) ou le UE distant (102) ;
**caractérisé en ce que** le rapport de latence comprend un indicateur à un bit indiquant l'activation d'un mode de tethering et une valeur de latence, et la valeur de latence comprend des informations sur la gigue et le temps d'arrivée de la rafale .

11. L' UE (101) de la revendication 10, dans laquelle la procédure assistée par l'UE insérant un horodatage de mesure ou enregistrant le temps d'un bloc de transport prédéfini, TB, du paquet.

12. L'UE (101) de la revendication 10, dans lequel le rapport de latence comprend en outre un ou plusieurs éléments comprenant des informations de latence de transmission de paquet et des informations liées au tethering.
